# EUROPEAN PATENT APPLICATION

(11) **EP 0 748 957 A2**
(43) Date of publication of application: **18.12.1996**
(21) Application number: 96109530.4
(22) Date of filing: 13.06.1996
(51) Int. Cl.: F16H 59/10, F16H 61/22

(54) **Key interlock system of shift selector lever for vehicle with automatic transmission**

(30) Priority: 14.06.1995 KR 9515762
(71) Applicant: HYUNDAI MOTOR COMPANY, Jongro-ku, Seoul 110-270 (KR)
(72) Inventor: Kim, Duk Ki, Seoul (KR)
(74) Representative: TER MEER - MÜLLER - STEINMEISTER & PARTNER

(57) **Abstract**

A key interlock lever (22) is installed pivotably by a hinge pin on a detent plate (23) such that the key interlock lever (22) is pushed by a key interlock cable (21) where an engine is started in an automatic transmission vehicle. After this key interlock lever is pivoted, a pivot-limiting member (29) is installed to pivot with a shift selector lever (25) at the same time such that a locking pin (27) goes down by a push button (26) and a shift selector lever (25) can change its mode to a certain transmission range from a parking mode.

## Description

### BACKGROUND

The present invention relates generally to a key interlock system of a shift selector lever for automatic transmission vehicles.

Generally, the shift mode of vehicles on which automatic transmissions are mounted is changed by a shift selector lever being manually operated. Particularly, an automatic transmission is provided with means for preventing a vehicle from recklessly driving forward or backward by disallowing a driver to move the selector lever from a parking position to another position unless he or she presses a brake pedal.

As such means, conventional vehicles have adopted a solenoid type parking lock lever for the shift selector lever.

However, such a solenoid type parking lock lever is a costly vehicle part, which causes an unfavorable effect on improving competitiveness in view of cost reduction.

Therefore, there is a need for means that fixes the shift selector lever other than this solenoid type parking lock lever, the function of which is identical to that of the solenoid type parking lock lever.

### SUMMARY

It is therefore an object of the present invention to provide a key interlock system satisfying the above need, which is low in price and performs the identical function to the conventional solenoid type parking lock lever.

To achieve the above object, the present invention provides a key interlock system of a shift selector lever for automatic transmission vehicles comprising means for fixing said shift selector lever in a certain shift mode; means for interlocking said shift selector lever, pivotable between at least a first position preventing said fixing means from being released when a driver does not operate a brake in a state where the shift selector lever is in a parking mode, and a second position to allow the release of said fixing means when the driver operates a brake, thereby allowing said shift selector lever to shift to another mode; and pivot-limiting means for preventing said interlock means from being restored to said first position when the shift selector lever is in another mode other than said parking mode.

In accordance with a feature of the present invention, a pivot axis of said pivot-limiting means is identical to that of said shift selector lever, and said pivot-limiting means is integrally pivoted according to a pivot motion of the shift selector lever.

In accordance with another feature, the relative positions of said interlock means and pivot-limiting means is such that the movement of the interlock means is not affected by said pivot-limiting means when the shift selector lever is in a parking mode, while the movement of said interlock means is limited by said pivot-limiting means when the shift selector lever is in a mode other than a parking mode.

Desirably, said fixing means include a slot formed on the shift selector lever, a locking pin moving along said slot according to the operation of a push button formed on the shift selector lever, and positioning lugs formed on a detent plate to limit the movement of said locking pin when said shift selector lever is located in a certain mode.

Also desirably, said means for interlocking the shift selector lever comprises a rotatable plate, which is installed pivotably by a hinge pin on a detent plate, pivoted by an interlock cable which interlocks according to the operation of a brake, a protrusion formed on one side of the below edge of this rotatable plate and extending toward said pivot-limiting means, and a hook portion which integrally extends from said rotatable plate and which prevents the fixing means from being unfixed when the shift selector lever is located in a parking mode.

Said pivot-limiting means comprise a fixed plate which is fixed to the identical axis to that of the shift selector lever and integrally moves along the movement of this shift selector lever, an arcuate plate which is extendedly formed from this fixed plate, a detent which extends toward said interlock means on an edge of this arcuate plate, and a release portion also defined on said edge of the arcuate plate. When said shift selector lever is located in a parking mode, said interlock means and said pivot-limiting means are positioned such that a protrusion formed on the rotatable plate of the interlock means can pivot through a release portion defined on the arcuate portion of said pivot-limiting means only when a brake is operated. When the shift selector lever is located in modes other than a parking mode, said interlock means and said pivot-limiting means are also positioned such that said protrusion cannot be restored to its initial position by a detent formed on the arcuate portion of said pivot-limiting means.

### BRIEF DESCRIPTION OF DRAWINGS

These and other features, aspects, and advantages of the present invention will become better understood with regard to the following detailed description in conjunction with the accompanying drawings, wherein:
Fig. 1 is a view illustrating a shift selector lever assembly provided with a key interlock system in accordance with a preferred embodiment of the present invention; and
Fig. 2 is a view illustrating an operational state of a key interlock system of a shift selector lever in accordance with a preferred embodiment of the present invention.

### DESCRIPTION

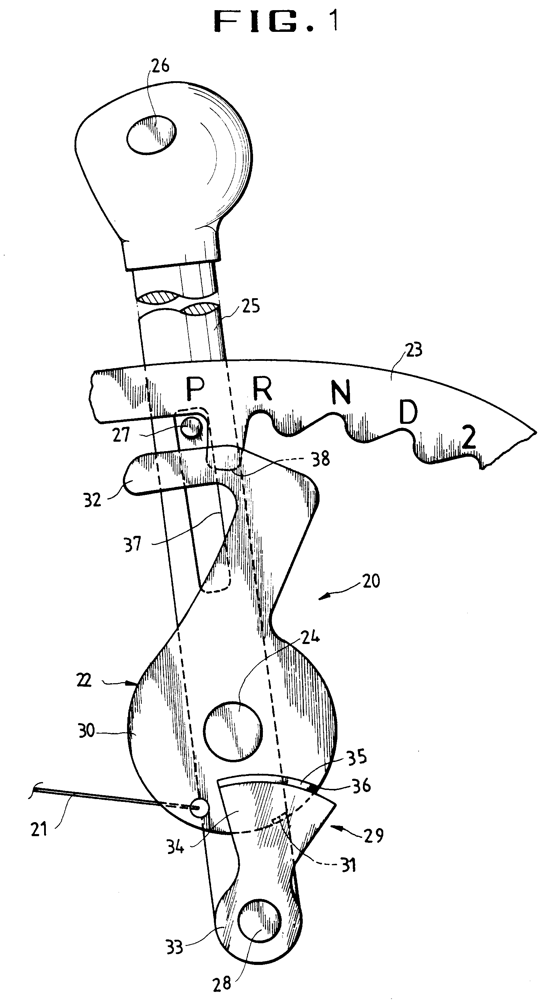

Reference will now be made in detail to a preferred embodiment of the present invention. An example of which is illustrated in the accompanying drawings. Fig. 1 is a shift selector lever assembly for which a key interlock system according to a preferred embodiment of the present invention is applied. The shift selector lever 25 is located in a parking mode (P), and the reference numeral 20 indicates a key interlock system.

The key interlock system 20 comprises a key interlock lever 22 fixed with a hinge pin 24 on a detent plate 23. When a driver operates a brake in an automatic transmission vehicle, the key interlock lever pivots about the hinge pin 24, while a key interlock cable 21 is pushed.

The key interlock system 20 of the present invention further comprises a pivot-limiting member 29 for limiting a pivot motion of the interlock lever 22. A pivot axis 28 of this pivot-limiting member 29 is common with that of the shift selector lever 25, and the pivot-limiting member 29 integrally pivots about this pivot axis 28 according to a pivot motion of the shift selector lever 25.

The shift selector lever 25 is provided with a slot 37 in which a locking pin 27 is slidably inserted. This locking pin 27 is connected with a push button 26 of the shift selector lever 25, and moves along the slot 37 according to the operation of the push button 26.

The interlock lever 22 comprises a rotatable plate 30 with which an interlock cable 21 is connected, a protrusion 31 projecting toward the pivot-limiting member 29 below the edge of the rotatable plate 30, and a hook portion 32 which integrally extends from the rotatable plate, preventing a locking pin 27 from dropping.

Meanwhile, the pivot-limiting member 29 comprises a fixed plate 33 which is fixed to a pivot axis 28, and an arcuate plate 34 which integrally extends from this fixed plate 34.

A detent 35 projecting toward this interlock lever 22 is formed in the arcuate plate 34 of the pivot-limiting member 29, in which the protrusion 31 of the interlock lever 22 gets caught when the shift selector lever 25 is in a mode other than a parking mode. The detent 35 is not formed throughout the edge of the pivot-limiting member 29. More specifically, a release portion in which a detent is not formed is defined as shown in Fig. 1 such that when the shift selector lever 25 is in a parking mode, the protrusion 31 does not get caught in the detent 35, and thereby the interlock lever can pivot counterclockwise (when observed in Fig. 1).

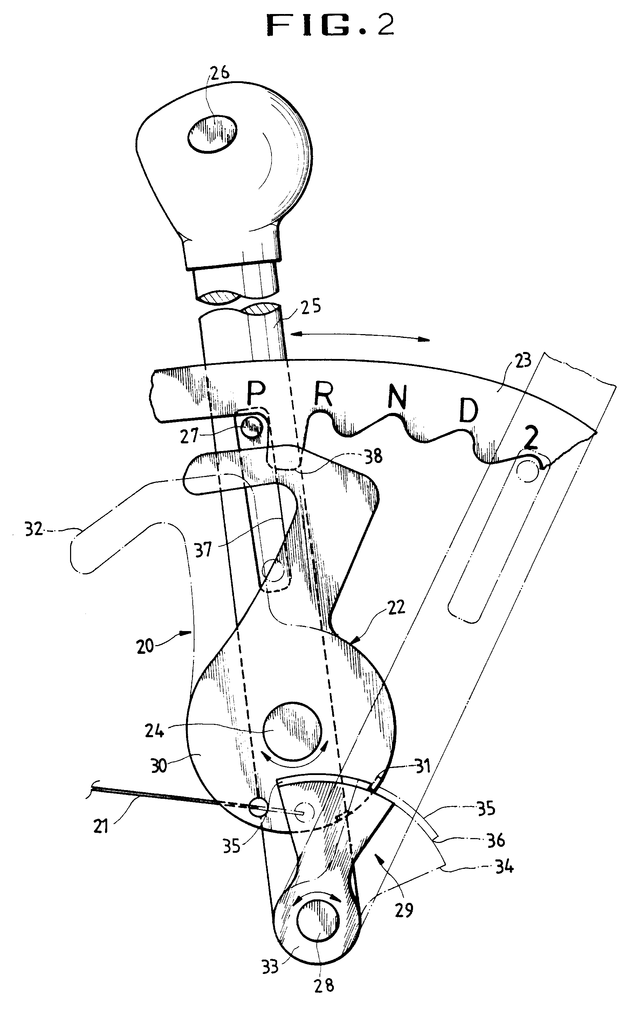

The following is the operation of the key interlock system 20 of the present invention using Fig. 2 as a reference.2

As in Fig. 1, if a driver presses the push button 26 of the shift selector lever 25 to move the lever 25 to a drive mode (D) or other driving modes when the driver does not press the brake pedal, the shift selector lever 25 does not move since the locking pin 27 cannot get out of the parking lug portion 38 due to the pin being hooked by the hook portion 32. Thereby, the driver can prevent inadvertent driving of vehicles which may occur when the driver changes the mode of the shift selector lever 25 to a driving mode in a state where a brake pedal is not pressed.

However, if the driver presses the brake pedal (not shown in the drawings) to move the mode of the shift selector lever 25, the interlock lever 22 is pivoted counterclockwise about the hinge pin 24, as shown in the phantom line of the interlock lever 22 in Fig. 2, since the interlock cable 21 interlocking with this brake pedal is pushed. Then, the interlock lever 22 and the pivot-limiting member 29 are such that the protrusion 31 formed on the rotatable plate 30 of this interlock lever 22 pivots to be in the same position as the phantom line after passing a release portion defined on the arcuate portion 34 of the pivot-limiting member 29.

In this state, if the driver presses the push button 25 of the shift selector lever 26, the locking pin 27 which interlocks with the push button 25 gets out of the parking lug portion 38, going down along the rectangular type slot 37 since the interlock lever 22 is in a state of having been pivoted counterclockwise. Once the locking pin 27 gets out of the parking lug portion 38 in this way, the shift selector lever 25 can pivot to move to another mode as the driver wishes, for example as shown in the phantom line in Fig. 2.

At this time, the pivot-limiting member 29 which integrally moves with the interlock lever 22 and the shift selector lever 25 is relatively positioned such that, even though the driver releases the brake pedal, the pivot-limiting member 29 does not return to the initial position as shown in Fig. 1 since the protrusion 31 formed on this interlock lever 22 gets caught in the detent 35 of the pivot-limiting member. Accordingly, the shift selector lever 25 can freely move within the range of a reverse mode (R), a neutral mode (N), etc. as the driver intends without being interrupted by the interlock lever 22. That is, when the shift selector lever 25 goes and returns in the other modes except for the parking mode, the protrusion 31 moves, contacting the detent 31.

In this state, if the driver moves the shift selector lever 25 to the parking mode (P) in order to park the vehicle and releases the brake pedal, the key interlock lever 22 and pivot-limiting member 29 are such that the key interlock lever 22 returns to the initial position, which is shown as a solid line for the key interlock lever in Fig. 2, since the protrusion 31 passes the release portion 36 without being hooked by the detent 35 of an arcuate plate 34. And then, the hook portion 32 keeps the shift selector lever 25 in the parking mode by preventing the locking pin 27 from going down.

In this way, the present invention simplifies the structure of the locking system for the shift selector lever, reduces the weight of vehicles, and minimizes costs.

## Claims

1. A key interlock system of a shift selector lever for automatic transmission vehicles comprising:
means for fixing said shift selector lever in a certain shift mode;
means for interlocking said shift selector lever, pivotable between at least a first position preventing said fixing means from being released in case a driver does not operate a brake when said shift selector lever is in a parking mode, and a second position to allow the release of said fixing means when the driver operates the brake, thereby allowing said shift selector lever to shift to another mode; and
pivot-limiting means for preventing said interlock means from being restored to said first position when the shift selector lever is in another mode other than said parking mode.

2. A key interlock system according to claim 1, wherein the pivot axis of said pivot-limiting means is identical to the pivot axis of said shift selector lever, and said pivot-limiting means pivot integrally according to a pivot motion of this shift selector lever.

3. A key interlock system according to claim 1, wherein said interlock means and pivot-limiting means are such that the movement of the interlock means is not affected by said pivot-limiting means when the shift selector lever is in a parking mode, while the movement of said interlock means is limited by said pivot-limiting means when the shift selector lever is in a mode other than a parking mode.

4. A key interlock system according to claim 1, wherein said fixing means comprise the slot formed on the shift selector lever, a locking pin moving along said slot according to the operation of a push button formed on the shift selector lever, and positioning lugs formed on a detent plate limiting the movement of said locking pin when said shift selector lever is located in a certain shift mode.

5. A key interlock system according to claim 1, wherein means for interlocking the shift selector lever comprise a rotatable plate, which is installed pivotably by a hinge pin on a detent plate, pivoted by an interlock cable which interlocks according to the operation of the brake, a protrusion formed on one side of the lower edge of this rotatable plate and projected toward said pivot-limiting means, and a hook portion which is integrally extends from said rotatable plate 32, and which prevents the fixing means from being released when the shift selector lever is located in a parking mode.

6. A key interlock system according to claim 1,
wherein said pivot-limiting means comprise a fixed plate which is fixed to the identical axis to that of the shift selector lever and integrally moves along the movement of this shift selector lever, an arcuate plate which is extendedly formed from this fixed plate, a detent which extends toward said interlock means on an edge of this arcuate plate, and a release portion also defined on said edge of the arcuate plate;
wherein said interlock means and said pivot-limiting means are such that a protrusion formed on the rotatable plate of this interlock means can pivot through a release portion defined on the arcuate portion of said pivot-limiting means only when a brake is operated, when said shift selector lever is located in a parking mode; and
wherein said interlock means and said pivot-limiting means are also such that said protrusion cannot return to its initial position by a detent formed on the arcuate portion of said pivot-limiting means, when the shift selector lever is located in modes other than the parking mode.
